# EUROPÄISCHE PATENTSCHRIFT

(11) **EP 0 372 611 B1**
(45) Veröffentlichungstag und Bekanntmachung des Hinweises auf die Patenterteilung: **27.01.1993**
(21) Anmeldenummer: 89202965.3
(22) Anmeldetag: 22.11.1989
(51) Int. Cl.: B65G 53/46

(54) **Schleusenvorrichtung**
Lock valve device
Dispositif d'écluse

(30) Priorität: 08.12.1988 DE 3841309
(43) Veröffentlichungstag der Anmeldung: 13.06.1990
(73) Patentinhaber: METALLGESELLSCHAFT Aktiengesellschaft, 60015 Frankfurt (DE)
(72) Erfinder: Herbert, Peter, Dr., D-6000 Frankfurt am Main (DE); Löffler, Johannes, Dr., D-6380 Bad Homburg (DE); Mehrling, Peter, D-6100 Darmstadt (DE); Zapke, Klaus, D-6457 Maintal 2 (DE)

(56) Entgegenhaltungen:
- DE-A- 1 100 256
- DE-A- 3 633 091
- FR-A- 1 045 028

## Beschreibung

Die Erfindung betrifft eine Schleusenvorrichtung für körnige Feststoffe mit einem um eine etwa senkrechte Achse drehbaren Rotor, der axial durchlässige Kammern zwischen radialen Speichen und einen zylindrischen Außenmantel aufweist, mit einer auf die Oberseite des Rotors gepreßten, drehfesten Deckscheibe, die eine Mündungsöffnung eines Zulaufkanals aufweist, mit einer unterhalb des Zulaufkanals angeordneten, gegen einen Teil der Unterseite des Rotors gepreßten Transportscheibe und mit einem die Deckscheibe, den Rotor und die Transportscheibe umschließenden Gehäuse, welches den Zulaufkanal und einen unter dem Rotor angeordneten Auslauf für die Feststoffe aufweist.

Eine solche Schleusenvorrichtung ist aus DE-A-3 633 091 bekannt, hierbei ist die Transportscheibe unbeweglich ausgebildet.

Der Erfindung liegt die Aufgabe zugrunde, eine Schleuse zu schaffen, bei welcher Gasverluste auch bei längerer Betriebszeit nicht zunehmen. Erfindungsgemäß gelingt dies bei der eingangs genannten Schleusenvorrichtung dadurch, daß die Transportscheibe um eine etwa senkrechte Achse drehbar ausgebildet und mit einem Motor gekoppelt ist.

Bei dieser Schleuse gleitet der Rotor beim Drehen auf der sich ebenfalls drehenden Transportscheibe, so daß ein gutes Einglätten der sich berührenden Flächen erreicht wird. Undichtigkeiten lassen sich hierdurch auch bei längerem Betrieb vermeiden.

Üblicherweise überdeckt die Deckscheibe mindestens ein Viertel der Oberseite des Rotors, damit sich einerseits eine ausreichend große Dichtungsfläche ergibt und andererseits der Rotor genügend gleichmäßig nach unten gegen die Transportscheibe gedrückt wird.

Zweckmäßigerweise beträgt der Durchmesser der Transportscheibe das 0,5- bis 1,5-fache des Rotordurchmessers. Die Transportscheibe berührt den Rotor, je nach Größe und Anordnung der beiden Teile, auf 20 bis 80 % der Unterseite des Rotors.

Einzelheiten der Schleusenvorrichtung werden mit Hilfe der Zeichnung erläutert. Es zeigt:
Fig. 1 einen Längsschnitt durch die Schleuse in schematischer Darstellung,
Fig. 2 eine Draufsicht auf den Rotor und die Transportscheibe und
Fig. 3 eine Draufsicht auf die Deckscheibe.

Die Schleuse weist als wesentliche Teile den Rotor (1), die Deckscheibe (2), den Zulaufkanal (3), die Transportscheibe (4) und das Gehäuse (10) auf. Der Zulaufkanal (3) ist mit dem Gehäuse verbunden, der Rotor (1) und die Transportscheibe (4) sind drehbar ausgebildet, die Deckscheibe (2) ist nicht drehbar. Der Rotor (1) ist mit einer senkrechten Welle (6) verbunden, die über einen Motor (7) angetrieben wird. Der Rotor (1) besitzt einen zylindrischen Außenmantel (11), radiale Speichen (12) und dazwischen axiale Kammern (13), die oben und unten offen sind. Die in vertikaler Richtung gemessene Höhe der Speichen (12) ist die gleiche wie die Höhe des Außenmantels (11).

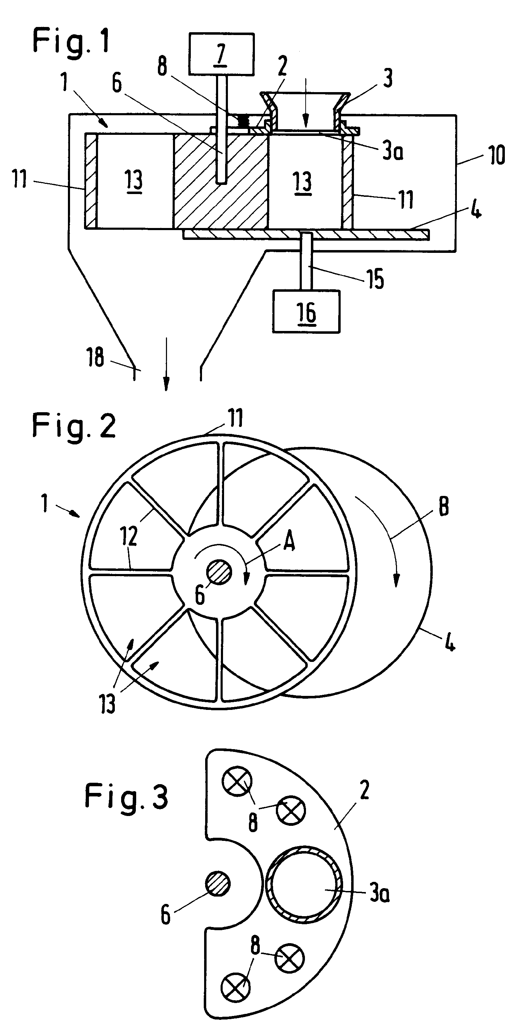

Die Deckscheibe (2), vgl. auch Fig. 3, hat etwa die Form eines Halbmonds, sie weist eine Öffnung (3a) auf, von welcher der Zulaufkanal (3) ausgeht. Der Kanal (3) ist mit der Deckscheibe (2) nicht fest verbunden. Die Deckscheibe (2) ist axial verschiebbar und gegen den Zulaufkanal abgedichtet, was in der Zeichnung nicht im einzelnen dargestellt wurde. Durch mehrere Druckfedern (8), deren Berührungsflächen auf der Oberseite der Deckscheibe (2) in Fig. 3 nur angedeutet sind, wird die Scheibe nach unten auf den Rotor (1) gepreßt. Die Druckfedern stützen sich oben am Gehäuse (10) der Schleuse ab. Durch das Gehäuse sind die Welle (6) sowie auch die Welle (15) abgedichtet hindurchgeführt, die Dichtungen wurden der besseren Übersichtlichkeit wegen weggelassen. Die Welle (15) gehört zum Antrieb (16) der Transportscheibe (4). Abweichend von der Darstellung in der Zeichnung kann man den Antrieb des Rotors (1) und der Transportscheibe (4) auch in das Gehäuse (10) einbeziehen.

In Fig. 2 kann man die Zuordnung der Transportscheibe (4) zum Rotor (1) in Draufsicht erkennen. Während des Betriebs werden der Rotor (1) und die Transportscheibe (4) drehend bewegt, wobei man z.B. für beide Teile den gleichen Drehsinn, vgl. die Pfeile (A) und (B), aber unterschiedliche Drehgeschwindigkeiten wählt. Rotor (1) und Transportscheibe (4) gleiten dabei aufeinander, wobei die sich berührenden Flächen ständig wechseln. Dadurch erfolgt eine gleichmäßige Abnutzung auf der ganzen Oberseite der Scheibe (4) und der Unterseite des Rotors (1), was ein erwünschtes Einglätten der Flächen zueinander mit sich bringt. Auf diese Weise wird verhindert, daß entlang der sich berührenden Flächen ein Spalt entsteht, durch welchen Gas hindurchtreten könnte.

Die Form der Deckscheibe (2), vgl. vor allem Fig. 3, ergibt sich aus der Forderung, daß sie mindestens drei Kammern (13) überdecken muß, damit die gewünschte Abdichtung erreicht wird. Wenn der Druck im Gehäuse (10) größer ist als im Zulaufkanal (3), ist beim Drehen des Rotors (1) nicht zu verhindern, daß das in einer Kammer (13) vorhandene Gas austritt, sobald diese Kammer die Öffnung (3a) der darüber befindlichen Deckscheibe (2) erreicht hat. Da sich dabei aber gleichzeitig die in Drehrichtung gesehen rückwärtige Speiche bereits unter der Deckscheibe (2) befindet, wird der direkte Gasdurchtritt vom Inneren des Gehäuses zum Zulaufkanal (3) oder umgekehrt vermieden.

Damit auch bei Abnutzung während des Betriebs eine konstante Gasdichtigkeit gewährleistet ist, sind der Rotor (1) und die Deckscheibe (2) in vertikaler Richtung bewegbar ausgebildet. Dadurch stützen sich der Rotor (1) stets auf der Transportscheibe (4) und die Deckscheibe (2) stets auf dem Rotor (1) ab. Wenn das Eigengewicht der Deckscheibe (2) groß genug ist, kann auf die Federn (8) verzichtet werden. Die Schleuse ist für einen höheren Druck im Zulaufkanal (3) als im Auslauf (18) oder auch umgekehrt geeignet.

Die Arbeitsweise der Schleuse ist folgende: Das in gewünschter Dosierung zu fördernde Gut fällt durch den Zulaufkanal (3) in die darunter befindliche Kammer des Rotors und wird beim Weiterdrehen des Rotors über den Rand der Transportscheibe (4) nach unten in den Auslauf (18) abgeworfen. Der Auslauf (18) kann mit einem unter Druck stehenden Reaktor verbunden sein. Da sich die Transportscheibe (4) ständig dreht, werden die Feststoffe in den Rotorkammern (13) ständig bewegt, was die Gefahr des Verklemmens von Feststoffen im Bereich der Berührungsflächen zwischen Rotor (1) und Transportscheibe (4) wesentlich vermindert.

## Patentansprüche

1. Schleusenvorrichtung für körnige Feststoffe mit einem um eine etwa senkrechte Achse drehbaren Rotor (1), der axial durchlässige Kammern (13) zwischen radialen Speichen (12) und einen zylindrischen Außenmantel (11) aufweist, mit einer auf die Oberseite des Rotors gepreßten, drehfesten Deckscheibe (2), die eine Mündungsöffnung (3a) eines Zulaufkanals (3) aufweist, mit einer unterhalb des Zulaufkanals angeordneten, gegen einen Teil der Unterseite des Rotors gepreßten Transportscheibe (4) und mit einem die Deckscheibe, den Rotor und die Transportscheibe umschließenden Gehäuse (10), welches den Zulaufkanal und einen unter dem Rotor angeordneten Auslauf (18) für die Feststoffe aufweist, dadurch gekennzeichnet, daß die Transportscheibe (4) um eine etwa senkrechte Achse (15) drehbar ausgebildet und mit einem Motor (16) gekoppelt ist.

2. Vorrichtung nach Anspruch 1, dadurch gekennzeichnet, daß die Deckscheibe (2) mindestens ein Viertel der Oberseite des Rotors (1) überdeckt.

3. Vorrichtung nach Anspruch 1 oder 2, dadurch gekennzeichnet, daß die Transportscheibe (4) den Rotor (1) auf 20 bis 80 % der Unterseite des Rotors berührt.

4. Vorrichtung nach Anspruch 1 oder einem der folgenden, dadurch gekennzeichnet, daß der Durchmesser der Transportscheibe (4) das 0,5- bis 1,5-fache des Rotordurchmessers beträgt.

## Claims

1. A lock chamber apparatus for granular solids comprising a rotor (1), which is rotatable about an approximately vertical axis and has axially permeable chambers (13) between radial spokes (12) and also has a cylindrical external shell (11), also comprising a non-rotatable top disk (2), which has been pressed onto the top face of the rotor and has a mouth opening (3a) of a supply passage (3), also comprising a transport disk (4), which is disposed below the supply passage and has been pressed against a part of the bottom face of the rotor, and a housing (10), which encloses the top disk, the rotor and the transport disk and comprises the supply passage and an outlet (18) for the solids, which outlet is disposed under the rotor, characterized in that the transport disk (4) is arranged to be rotatable about an approximately vertical axis (15) and is coupled to a motor (16).

2. An apparatus according to claim 1, characterized in that the top disk (2) covers at least one-fourth of the top face of the rotor (1).

3. An apparatus according to claim 1 or 2, characterized in that the transport disk (4) contacts the rotor (1) on 20 to 80 % of the bottom face of the rotor.

4. An apparatus according to claim 1 or any of the following claims, characterized in that the diameter of the transport disk (4) is 0.5 to 1.5 times the diameter of the rotor.

## Revendications

1. Installation à sas pour des matières solides en grains, comprenant un rotor (1) tournant par rapport à un axe à peu près vertical et comportant des chambres (13) de passage axiales entre des rayons (12) radiaux et une face latérale extérieure (11) cylindrique, un disque de couverture (2) immobile en rotation poussé sur la face supérieure du rotor et comportant un orifice d'embouchure (3a) d'un canal d'amenée (3), un disque de transport (4) disposé en-dessous du canal d'amenée et poussé sur une partie de la face inférieure du rotor, et une enveloppe (10) entourant le disque de couverture, le rotor et le disque de transport et comportant le canal d'amenée et une sortie (18) pour la matière solide disposée en-dessous du rotor, caractérisée en ce que le disque de transport (4) est monté tournant par rapport à un axe (16) à peu près vertical et est couplé à un moteur (16).

2. Installation suivant la revendication 1, caractérisée en ce que le disque de couverture (2) recouvre au moins un quart de la face supérieure du rotor (1).

3. Installation suivant la revendication 1 ou 2, caractérisée en ce que le disque de transport (4) touche le rotor (1) sur 20 à 80 % de la face inférieure du rotor.

4. Installation suivant la revendication 1 ou l'une des suivantes, caractérisée en ce que le diamètre du disque de transport (4) représente de 0,5 à 1,5 fois le diamètre du rotor.
